# EUROPEAN PATENT APPLICATION

(11) **EP 4 387 020 A1**
(43) Date of publication of application: **19.06.2024**
(21) Application number: 22306922.0
(22) Date of filing: 16.12.2022
(51) Int. Cl.: H02G 1/14, H02G 15/113, H02G 15/115, H02G 15/00

(54) **JOINT WATER BARRIER**

(71) Applicant: Nexans, 92400 Courbevoie (FR)
(72) Inventor: MAURI, Massimiliano, 1739 Borgenhaugen (NO); SCHAWLANN, Sigurd, 1610 Fredrikstad (NO); JOHANSON, Audun, 0653 Oslo (NO); BENGTSSON, Karl-Magnus, 0687 Oslo (NO)
(74) Representative: Ipsilon

(57) **Abstract**

A joint (300) for joining a first electric cable (100) and a second electric cable (200), each cable (100; 200) comprising an electric conductor, an insulation system surrounding the electric conductor, and a water barrier (130;230) surrounding the insulation system; wherein the insulation system comprises an inner semiconducting layer, an insulating layer and an outer semiconducting layer, wherein the joint comprises an electrical conductor joint electrically connecting end sections of the two electrical conductors; an insulation system joint comprising an inner layer made of a first polymeric semiconducting material surrounding the electric conductor joint, an intermediate insulating layer made of a polymeric insulating material, covering an external surface of the inner semiconducting layer, an outer layer made of a second polymeric semiconducting material, covering an external surface of the insulating layer; and a water barrier layer surrounding the insulation system joint, wherein the water barrier layer is made of pre-formed water barrier elements (140a; 140b; 240a; 240b;).

## Description

### Field of the invention

The present invention relates to a water barrier for a joint, especially to a lead-free water barrier.

### Background

The current carrying parts of power cables may need to be kept dry. Intrusion of humidity or water may cause electrical breakdown of the power cable insulation system. The core section of power cables is therefore usually protected by a water barrier arranged radially around the cable core. Up to date, the dominating material in water barriers for power cables is lead since lead has proven to be a reliable and sturdy sheathing material.

Several solutions for insulation systems providing water barriers to submarine power cables are known, but all have various disadvantages that should be overcome. One drawback is that lead is a high-density materiel adding significant weight to the cable. The heavy weight induces extra costs in the entire value chain from production, under transport, storage, deployment, and when the cable is discarded after reaching its lifetime. Another drawback is that lead has a relatively low fatigue resistance making leaden water barriers less suited for dynamical power cables. Furthermore, lead meets increasingly demanding environmental regulations and restrictions. An environmentally friendly alternative to lead as water barrier in power cables is required.

A known alternative to lead screens is the use of metallic screens. These screen types have a high per-unit-length resistance, which is excellent for cables in operation as induced currents are small and hence also the losses occurring in them.

When jointing two high voltage cables each comprising a lead-free water barrier, the water barrier also needs to be jointed, which, when using method known for lead water barrier, results in a joint that is not watertight.

The present invention attempts to solve this challenge, or at least to improve on existing solutions.

### SUMMARY OF THE INVENTION

The present invention is defined by the appended claims and in the following.

In a first aspect, the present invention relates to a joint for joining a first electric cable and a second electric cable, each cable comprising an electric conductor, an insulation system surrounding the electric conductor, and a water barrier surrounding the insulation system; wherein the insulation system comprises an inner semiconducting layer, an insulating layer and an outer semiconducting layer, wherein the joint comprises
- an electrical conductor joint electrically connecting end sections of the two electrical conductors;
- an insulation system comprising
   - an inner layer made of a first polymeric semiconducting material for surrounding the electric conductor joint,
   - an intermediate insulating layer made of a polymeric insulating material, covering an external surface of the inner semiconducting layer,
   - an outer layer made of a second polymeric semiconducting material, covering an external surface of the insulating layer;
      and
- a water barrier layer surrounding the insulation system, wherein the water barrier layer is made of pre-formed water barrier elements.

In an embodiment, the space between the insulation system and the water barrier layer may be filled with a filler.

In an embodiment, the water barrier layer may be made of pre-formed water barrier elements. The pre-formed water barrier elements form together a water barrier layer covering the electrical joint and insulation layers. The water barrier layer may for example be a tubular element, comprising
- a first cylindrical part, with an inner diameter equal to or slightly bigger than the outer diameter of the first power cable (up to and including the water barrier) that is desired joined; this part is intended to be welded to the water barrier of the first power cable;
- a conical part, flaring from the first cylindrical part to a second cylindrical part;
- a second cylindrical part, with an inner diameter bigger than the outer diameter of the joint; this part is intended to surround the joint in its entirety and should be dimensioned properly;
- a conical part, tapering from the second cylindrical part to a third cylindrical part;
- a third cylindrical part, with an inner diameter equal to or slightly bigger than the outer diameter of the second power cable (up to and including the water barrier) that is desired joined; this part is intended to be welded to the water barrier of the second power cable.

In an embodiment, the pre-formed water barrier elements may be elements having a fixed shape that are intended to be welded together. A tape to be wrapped around the joint does not fit that description.

The pre-formed water barrier elements are designed to form together a water barrier covering the electrical joint and insulation layers

In an embodiment, the water barrier layer may be lead-free.

The term "lead-free" as applied here refers to metallic screen comprising less than 5%, less than 4%, less than 3%, less than 2%, less than 1%, less than 0.5%, less than 0.4%, less than 0.3%, less than 0.2%, less than 0.1%, less than 0.05%, or preferably comprising 0% lead.

In an embodiment, the water barrier layer may be made of :
- aluminium,
- an aluminium alloy of the AA1xxx series, AA5xxx series or the AA6xxx series according to the Aluminium Association Standard,
- titanium
- a titanium alloy
- tin
- a tin alloy
- copper
- a copper-alloy
- a CuNi-alloy
- a CuNiSi-alloy age hardened to T6,
- iron
- a Fe-alloy
- stainless steel alloy SS316; or
- stainless steel alloy S32750.

In an embodiment, the water barrier of the first and/or of the second electric cable may be lead-free.

The term "lead-free" as applied here refers to metallic screen comprising less than 5%, less than 4%, less than 3%, less than 2%, less than 1%, less than 0.5%, less than 0.4%, less than 0.3%, less than 0.2%, less than 0.1%, less than 0.05%, or preferably comprising 0% lead.

In an embodiment, the water barrier of the first and/or of the second electric cable may be made of :
- aluminium,
- an aluminium alloy of the AA1xxx series, AA5xxx series or the AA6xxx series according to the Aluminium Association Standard,
- titanium
- a titanium alloy
- tin
- a tin alloy
- copper
- a copper-alloy
- a CuNi-alloy
- a CuNiSi-alloy age hardened to T6,
- iron
- a Fe-alloy
- stainless steel alloy SS316; or
- stainless steel alloy S32750.

In an embodiment, the water barrier of the first and/or of the second electric cable and the water barrier layer may be made of the same material.

In an embodiment, the filler may be a gel, sand, one-part or two-part epoxy, polyurethane resin and or foam, or a low viscosity melted polymer.

In an embodiment, the joint may comprise a polymeric sheath layer, surrounding the water barrier layer, for corrosion protection.

In an embodiment, the joint may comprise a reinforcement layer, surrounding the water barrier layer.

In an embodiment, reinforcement layer may be made of
- a bare metallic tape with direct contact between the water barrier or the polymeric sheath layer, when present, and the metallic tape;
- a metallic tape with an adhesive layer, between the water barrier or the polymeric sheath layer, when present, and the metallic tape;
- a composite layer, such as a composite layer comprising carbon or glass fibres; or
- a laminate comprising a first adhesive polymer layer, a metal layer and a second adhesive polymer layer. This laminate can be premade or assembled directly on the cable for example by extruding the first adhesive polymer layer, helicoidally wrapping a metal tape around the first adhesive polymer layer, forming the metal layer, and then extruding the second adhesive polymer layer around the metal layer.

All these reinforcement layer may be used in combination with an adhesive layer between the polymeric sheath layer and the reinforcement layer (such as yparex, etc.).

In a second aspect, the invention relates to a method for manufacturing an electric cable joint, the method comprising the steps of:
a) providing a first and a second electric cables, each cable comprising an electric conductor, an insulation system surrounding the electric conductor, and a water barrier surrounding the insulation;
b) placing pre-formed water barrier elements on the respective end sections of the first and a second electric cables;
c) joining the respective end sections of the electric conductors of the first electric cable and of the second electric cable to form an electric conductor joint;
d) surrounding the electric conductor joint with an insulation system joint; and
e) jointing the pre-formed water barrier elements (140; 240) together and to the water barriers (130; 230) of the first electric cable and of the second electric cable.
   In an embodiment of the method according to the second aspect, the method may further comprise the step of
f) sliding the pre-formed water barrier elements over the insulation system joint.

In an third aspect, the invention relates to a cable comprising two cable sections and a joint, each cable section comprising an electric conductor, an insulation system surrounding the electric conductor, and a water barrier surrounding the insulation system; wherein the insulation system comprises an inner semiconducting layer, an insulating layer and an outer semiconducting layer,
the joint comprising:
- an electrical conductor joint electrically connecting end sections of the two electrical conductors;
- an insulation system joint comprising
   - an inner layer made of a first polymeric semiconducting material surrounding the electric conductor joint,
   - an intermediate insulating layer made of a polymeric insulating material, covering an external surface of the inner semiconducting layer,
   - an outer layer made of a second polymeric semiconducting material, covering an external surface of the insulating layer; and
- a water barrier layer surrounding the insulation system joint, wherein the water barrier layer is made of pre-formed water barrier elements.

In an embodiment, the power cable may comprise two or more cable cores.

In an embodiment, the power cable may comprise two, three, four or six cable cores.

In an embodiment, the power cable may comprise three cable cores.

The term "semi-conducting" as used herein, refers to middle level of electric conductivity, i.e. an electric conductivity falling between the electric conductivity of an electric conductor and an electric insulator.

### SHORT DESCRIPTION OF THE DRAWINGS

In the following description this invention will be further explained by way of exemplary embodiments shown in the drawings:
Fig. 1a-1b is a side view of a embodiments of the pre-formed water barrier element.
Fig. 2a-2f is a side view of a first embodiment of the jointing procedure.
Fig. 3a-3f is a side view of a second embodiment of the jointing procedure.
Fig. 4a-4f is a side view of a third embodiment of the jointing procedure.
Fig. 5 is a cross section of an embodiment of the joint

### DETAILED DESCRIPTION OF THE INVENTION

The current carrying parts of power cables may need to be kept dry. Intrusion of humidity or water may cause electrical breakdown of the power cable insulation system. The core section of power cables is therefore usually protected by a water barrier arranged radially around the cable core. Up to date, the dominating material in water barriers for power cables is lead since lead has proven to be a reliable and sturdy sheathing material.

Thin, high-resistance metallic screens and laminate solutions are coming up as candidate alternatives to replace lead, but have significant drawbacks and issues related to high-voltage testing and short-circuit current capacity. Due to these issues, the current power cable structures do not allow the use of high-resistance metallic screen, as the power cable may be quickly damaged and become unfit for use.

Jointing cables with these lead-free water barriers is challenging. The specific properties of these metallic screens make it difficult if not impossible to adapt procedures known in the art, for example traditionally used with lead-based water barrier polymer, where once set each layer will not be affected by the heating of the subsequent layer.

The invention therefore relates to a novel structure for a watertight joint 300 for a power cable 100;200 comprising a lead-free water barrier 130;230, such as a metallic screen.

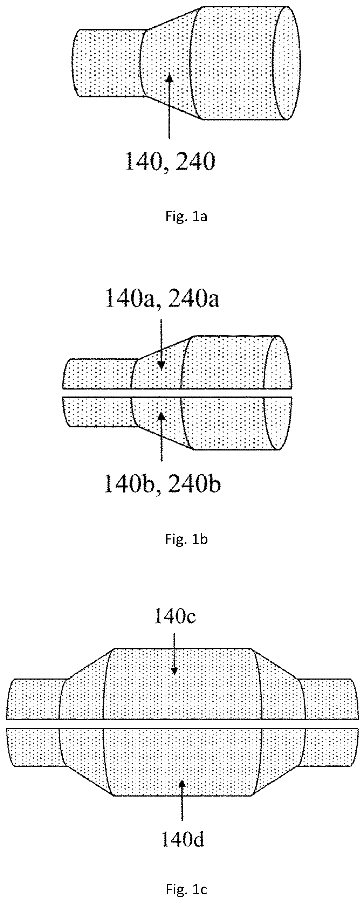

Fig.1 shows two embodiments of a pre-formed water barrier elements 140;240 that is used in the watertight joint 300. In fig. 1a, a first embodiment of the pre-formed water barrier elements 140;240 is illustrated. The pre-formed water barrier elements 140;240 is a tubular element comprising
- a first cylindrical part, with an inner diameter equal to or slightly bigger than the outer diameter of the cable (up to and including the water barrier 130;230) that is desired joined; this part is intended to be welded to the water barrier 130;230 of the power cable 100;200;
- a conical part, flaring from the first cylindrical part to a second cylindrical part;
- a second cylindrical part, with an inner diameter bigger than the outer diameter of the cable 100;200 and than the diameter of the intended joint 300; this part is intended to be welded to the corresponding second cylindrical part of another pre-formed water barrier element 140;240, so that the pre-formed water barrier elements 140;240 form a water barrier forming the water barrier 314 for the joint 300.

In fig. 1b, a second embodiment of the pre-formed water barrier elements 140;240 is illustrated.

The pre-formed water barrier elements 140a, 140b; 240a,240b are each half of a tubular element comprising
- a first cylindrical part, with an inner diameter equal to or slightly bigger than the outer diameter of the cable (up to and including the water barrier 130;230) that is desired joined; this part is intended to be welded to the water barrier 130;230 of the power cable 100;200;
- a conical part, flaring from the first cylindrical part to a second cylindrical part;
- a second cylindrical part, with an inner diameter bigger than the outer diameter of the cable 100;200 and than the diameter of the intended joint 300; this part is intended to be welded to the corresponding second cylindrical part of another pre-formed water barrier element 140;240, so that the pre-formed water barrier elements 140;240 form a water barrier forming the water barrier 314 for the joint 300.

In fig. 1c, a third embodiment of the pre-formed water barrier elements 140;240 is illustrated.

The pre-formed water barrier elements 140c;140d are each half of a tubular element comprising
- a first cylindrical part, with an inner diameter equal to or slightly bigger than the outer diameter of the first power cable (up to and including the water barrier) that is desired joined; this part is intended to be welded to the water barrier of the first power cable;
- a conical part, flaring from the first cylindrical part to a second cylindrical part;
- a second cylindrical part, with an inner diameter bigger than the outer diameter of the joint; this part is intended to surround the joint in its entirety and should be dimensioned properly;
- a conical part, tapering from the second cylindrical part to a third cylindrical part;
- a third cylindrical part, with an inner diameter equal to or slightly bigger than the outer diameter of the second power cable (up to and including the water barrier) that is desired joined; this part is intended to be welded to the water barrier of the second power cable.

Although the first and second embodiment of the pre-formed water barrier elements 140;240 only show a full tubular element and two halves of a tubular element, the pre-formed water barrier elements 140;240 could also be made of a plurality of sections of a tubular element.

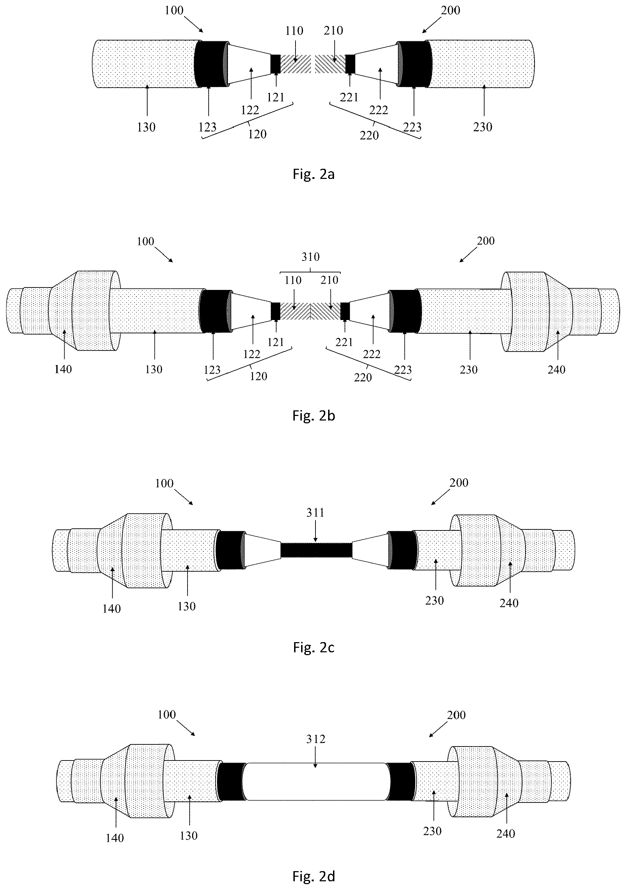

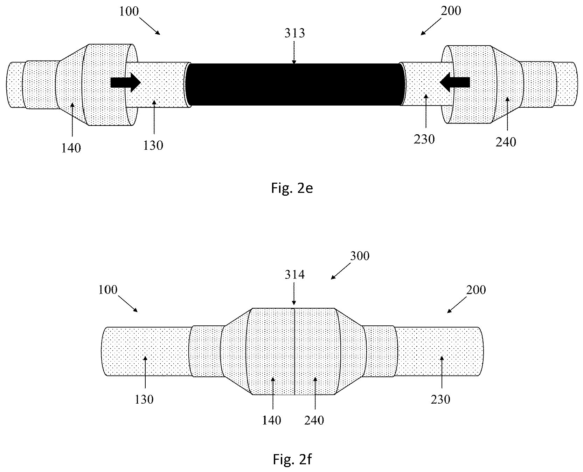

The present invention also provides an improved method for manufacturing a watertight electric cable joint 300,
In a first embodiment of the method, illustrated in figure 2, the method comprises the steps of:
- providing a first and a second electric cables 100; 200, each cable comprising an electric conductor 110; 210 and an insulation system 120; 220, surrounding the electric conductor 110; 210, the insulation system 120; 220 comprising an inner semiconducting layer 121; 221, an insulating layer 122; 222 and an outer semiconducting layer 123; 223; (Figure 2a)
- placing pre-formed water barrier elements 140;240 on the first and second electric cables 100; 200, respectively; (Figure 2b)
- joining the respective end sections of the electric conductors 110; 210 of the first electric cable and of a second electric cable placed axially adjacent to the first electric cable, to form an electric conductor joint 310; (Figure 2b)
- surrounding the electric conductor joint 310 with a joint inner semiconducting layer 311; (Figure 2c)
- surrounding the joint inner semiconducting layer 311 with a joint insulating layer 312 (Figure 2d); and
- surrounding the j oint insulating layer 312 with a j oint outer semiconducting layer 313 (Figure 2e);
- sliding the pre-formed water barrier elements 140;240.over the joint outer semiconducting layer 313 and welding or soldering the pre-formed water barrier elements 140;240 together and to the water barrier 130;230 of the first and a second electric cables 100;200, respectively (Figure 2f); forming a joint water barrier layer 314.

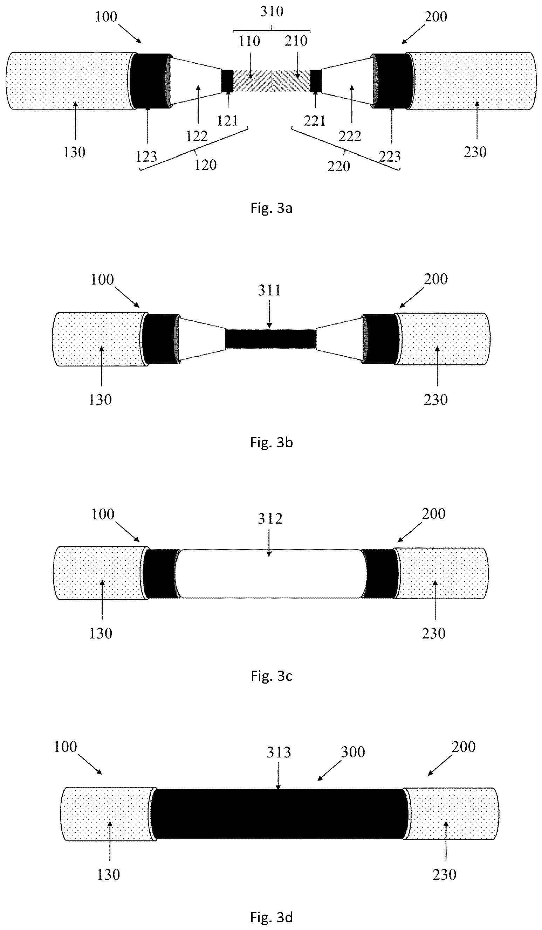

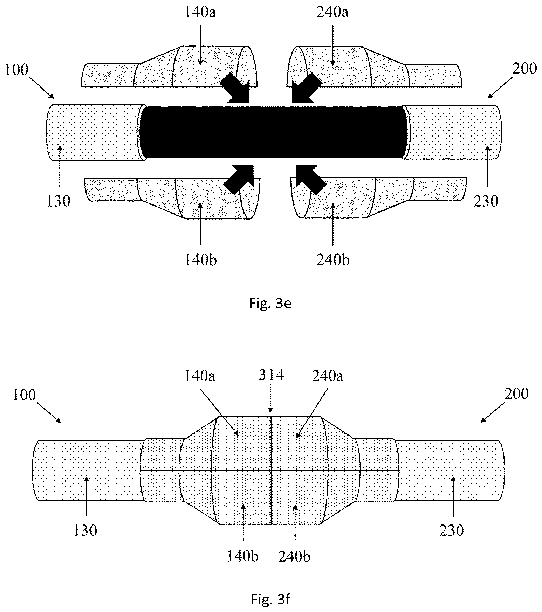

In a second embodiment of the method, illustrated in figure 3, the method comprises the steps of:
- providing a first and a second electric cables 100; 200, each cable comprising an electric conductor 110; 210 and an insulation system 120; 220, surrounding the electric conductor 110; 210, the insulation system 120; 220 comprising an inner semiconducting layer 121; 221, an insulating layer 122; 222 and an outer semiconducting layer 123; 223; (Figure 3a)
- joining the respective end sections of the electric conductors 110; 210 of the first electric cable and of a second electric cable placed axially adjacent to the first electric cable, to form an electric conductor joint 310; (Figure 3a)
- surrounding the electric conductor joint 310 with a joint inner semiconducting layer 311; (Figure 3b)
- surrounding the joint inner semiconducting layer 311 with a joint insulating layer 312 (Figure 3c); and
- surrounding the j oint insulating layer 312 with a j oint outer semiconducting layer 313 (Figure 3d);
- placing pre-formed water barrier elements 140a, 140b;240a,240b on the first and second electric cables 100; 200, respectively, over the joint outer semiconducting layer 313 (Figure 3e); and
- welding or soldering the pre-formed water barrier elements 140a, 140b;240a,240b together and to the water barrier 130;230 of the first and a second electric cables 100;200, respectively (Figure 3f); forming a joint water barrier layer 314.

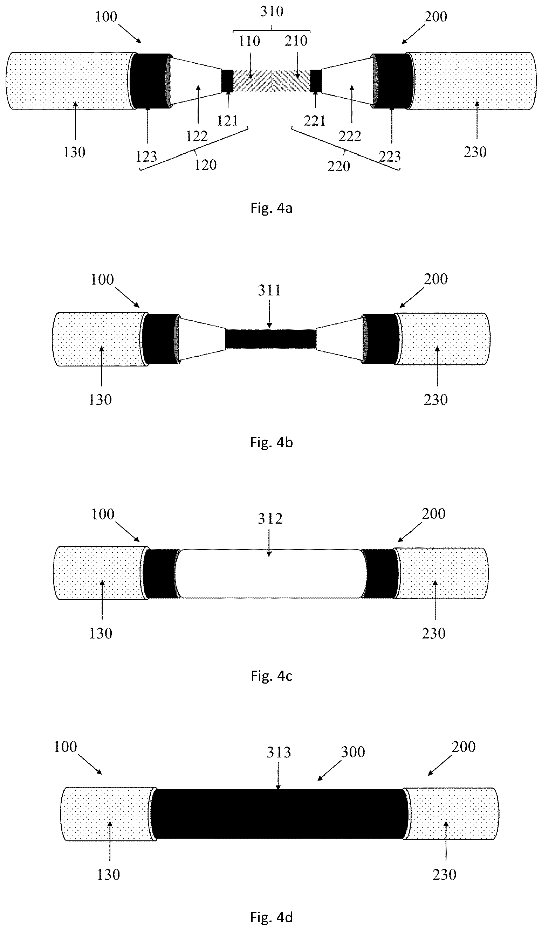

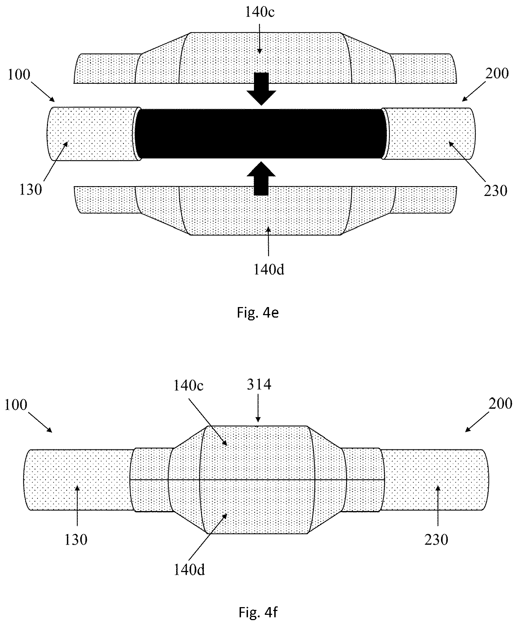

In a third embodiment of the method, illustrated in figure 4, the method comprises the steps of:
- providing a first and a second electric cables 100; 200, each cable comprising an electric conductor 110; 210 and an insulation system 120; 220, surrounding the electric conductor 110; 210, the insulation system 120; 220 comprising an inner semiconducting layer 121; 221, an insulating layer 122; 222 and an outer semiconducting layer 123; 223; (Figure 4a)
- joining the respective end sections of the electric conductors 110; 210 of the first electric cable and of a second electric cable placed axially adjacent to the first electric cable, to form an electric conductor joint 310; (Figure 4a)
- surrounding the electric conductor joint 310 with a joint inner semiconducting layer 311; (Figure 4b)
- surrounding the joint inner semiconducting layer 311 with a joint insulating layer 312 (Figure 4c); and
- surrounding the j oint insulating layer 312 with a j oint outer semiconducting layer 313 (Figure 4d);
- placing pre-formed water barrier elements 140c, 140d; on the first and second electric cables 100; 200, and over the joint outer semiconducting layer 313 (Figure 4e); and
- welding or soldering the pre-formed water barrier elements 140c,140d together and to the water barrier 130;230 of the first and a second electric cables 100;200, respectively (Figure 4f); forming a joint water barrier layer 314.

This method is independent from the material used for the different joint layers (310, 311, 312, 313) and of the method used to form each layer.

The inventive method can be further improved by adding a step of filling the possible existing empty space between the joint insulation layer 313 and the joint water barrier layer 314 with a filler, for example through one or more hole(s) in the pre-formed water barrier elements 140;240; 140a, 140b;240a,240b; 140c; 140d.

The filler may be a gel, sand, one-part or two-part epoxy, polyurethane resin and or foam, a low viscosity melted polymer, etc.

The hole in the metallic water barrier may then be sealed.

The filler further improves the watertightness of the joint 300.

The inventive method may also include a further step:
- providing a polymeric sheath surrounding the joint water barrier layer 314, forming a polymeric sheath layer 316.

The polymeric sheath layer 316 may either be conductive or non-conductive, to provide protection and mechanical support to the water barrier.

A polyethylene-based adhesive, either conductive or non-conductive, may be added between the polymeric sheath layer 316 and the joint water barrier layer 314 to increase adhesion between the layers. The polyethylene-based adhesive material can be constituted of a copolymer of ethylene with one or more polar monomers (acrylic acid, methacrylic acid, glycidyl methacrylate, maleic acid, maleic anhydride or similar).

Examples of such polymeric materials for the polymeric sheath layer 316 are:
Copolymer of ethylene and ethyl acrylate (or similar acrylates)
Copolymer of ethylene and ethyl acrylic acid, methacrylic acid or similar
Copolymer of ethylene and glycidyl methacrylate (or similar epoxy-based monomer such as 1,2-epoxyl-butene or similar)
Copolymer of ethylene and maleic-anhydride, or similar.

The polymeric material may contain semiconductive additives, such as carbon black or similar, in the case where semiconductive material is desired.

The inventive method may also include a further step:
- providing a reinforcement tape surrounding the polymeric sheath, forming a reinforcement layer 317.

This transversal/stiffening reinforcement tape may for example be helically applied to the sheathing.

The reinforcement tape may for example be:
a. a bare metallic tape with direct contact between sheath and tape;
b. a metallic tape with an adhesive layer, between sheath and tape;
c. a premade polymer-adhesive-metal-adhesive-polymer laminate;
d. an adhesive extrusion-helical tape-adhesive extrusion.

Heating may be necessary after application of the reinforcement tape to ensure adhesion between the reinforcement layer 317 and the polymeric sheath layer 316.

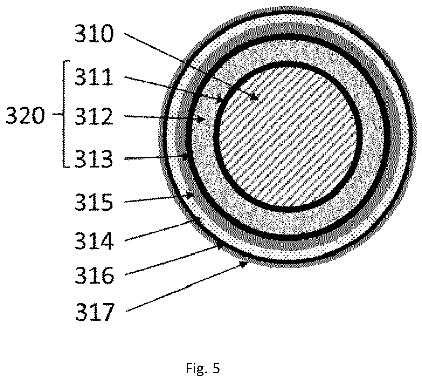

Figure 5 is a cross section of an embodiment of the joint. In this embodiment, the joint comprises
- an electric conductor joint 310,
- an inner layer 311 made of a first polymeric semiconducting material for surrounding the electric conductor joint 310,
- an intermediate insulating layer 312 made of a polymeric insulating material, covering an external surface of the inner semiconducting layer 311,
- an outer layer 313 made of a second polymeric semiconducting material, covering an external surface of the insulating layer 312.

The inner semiconducting layer 311, the intermediate insulating layer 312 and outer semiconducting layer 313 compose the insulation system joint 320 of the joint.

The joint also comprises
- a water barrier layer 314;
   wherein the space between the insulation system joint 320 and the water barrier layer 314 is filled with a filler, forming a filler layer 315. This layer may be uneven and even comprise holes.

In this embodiment, the joint further comprises
- a polymeric sheath layer 316; and
- a reinforcement layer 317.

## Claims

1. A joint (300) for joining a first electric cable (100) and a second electric cable (200), each cable (100; 200) comprising an electric conductor (110; 210), an insulation system (120; 220) surrounding the electric conductor (110; 210), and a water barrier (130;230) surrounding the insulation system (120; 220); wherein the insulation system (120; 220) comprises an inner semiconducting layer (121; 221), an insulating layer (122; 222) and an outer semiconducting layer (123; 223),
wherein the joint (300) comprises
- an electrical conductor joint (310) electrically connecting end sections of the two electrical conductors (110; 210);
- an insulation system joint (320) comprising
• an inner layer (311) made of a first polymeric semiconducting material surrounding the electric conductor joint (310),
• an intermediate insulating layer (312) made of a polymeric insulating material, covering an external surface of the inner semiconducting layer (311),
• an outer layer (313) made of a second polymeric semiconducting material, covering an external surface of the insulating layer (312);
and
- a water barrier layer (314) surrounding the insulation system joint (320), wherein the water barrier layer (314) is made of pre-formed water barrier elements (140; 240; 140a; 140b; 140c; 140d; 240a; 240b; 400a; 400b).

2. A joint (300) according to claim 1, wherein the space between the insulation system joint (320) and the water barrier layer (314) is filled with a filler.

3. A joint (300) according to any of the previous claims, wherein the water barrier layer (314) is lead-free.

4. A joint (300) according to any of the previous claims, wherein the water barrier layer (314) is made of :
- aluminium,
- an aluminium alloy of the AA1xxx series, AA5xxx series or the AA6xxx series according to the Aluminium Association Standard,
- copper
- a copper-alloy
- a CuNi-alloy
- a CuNiSi-alloy age hardened to T6,
- iron
- a Fe-alloy
- stainless steel alloy SS316; or
- stainless steel alloy S32750.

5. A joint (300) according to any of the previous claims, wherein the water barrier (130; 230) of the first and/or of the second electric cable (100; 200) is lead-free.

6. A joint (300) according to any of the previous claims, wherein the water barrier (130; 230) of the first and/or of the second electric cable (100; 200) is made of :
- aluminium,
- an aluminium alloy of the AA1xxx series, AA5xxx series or the AA6xxx series according to the Aluminium Association Standard,
- copper
- a copper-alloy
- a CuNi-alloy
- a CuNiSi-alloy age hardened to T6,
- iron
- a Fe-alloy
- stainless steel alloy SS316; or
- stainless steel alloy S32750.

7. A joint (300) according to any of the previous claims, wherein the water barrier (130; 230) of the first and/or of the second electric cable (100; 200) and the water barrier layer (314) are made of the same material.

8. A joint (300) according to any of the previous claims, wherein the filler comprises a gel, sand, one-part or two-part epoxy, polyurethane resin and or foam, or a low viscosity melted polymer.

9. A joint (300) according to any of the previous claims, wherein the filler is a gel, sand, one-part or two-part epoxy, polyurethane resin and or foam, or a low viscosity melted polymer.

10. A joint (300) according to any of the previous claims, further comprising a polymeric sheath layer (316) surrounding the water barrier layer (314).

11. A joint (300) according to any of the previous claims, further comprising a reinforcement layer (317) surrounding the water barrier layer (314).

12. A joint (300) according to any of the previous claims, wherein the reinforcement layer (317) is made of :
- a bare metallic tape with direct contact between the water barrier or the polymeric sheath layer, when present, and the metallic tape;
- a metallic tape with an adhesive layer, between the water barrier or the polymeric sheath layer, when present, and the metallic tape;
- a composite layer, such as a composite layer comprising carbon or glass fibres; or
- a laminate comprising a first adhesive polymer layer, a metal layer and a second adhesive polymer layer.

13. A method for manufacturing an electric cable joint (300), the method comprising the steps of:
a) providing a first and a second electric cables (100; 200), each cable comprising an electric conductor (110; 210), an insulation system (120; 220) surrounding the electric conductor (110; 210), and a water barrier (130; 230) surrounding the insulation system (120; 220);
b) joining the respective end sections of the electric conductors (110; 210) of the first electric cable and of the second electric cable to form an electric conductor joint (310);
c) surrounding the electric conductor joint (310) with an insulation system joint (320); and
d) placing pre-formed water barrier elements (140; 240) over the insulation system joint (320); and
e) jointing the pre-formed water barrier elements (140; 240) together and to the water barriers (130; 230) of the first electric cable and of the second electric cable.

14. A cable comprising two cable sections (100; 200) and a joint (300), each cable section (100; 200) comprising an electric conductor (110; 210), an insulation system (120; 220) surrounding the electric conductor (110; 210), and a water barrier (130;230) surrounding the insulation system (120; 220);
wherein the insulation system (120; 220) comprises an inner semiconducting layer (121; 221), an insulating layer (122; 222) and an outer semiconducting layer (123; 223),
the joint (300) comprising:
- an electrical conductor joint (310) electrically connecting end sections of the two electrical conductors (110; 210);
- an insulation system joint (320) comprising
• an inner layer (311) made of a first polymeric semiconducting material surrounding the electric conductor joint (310),
• an intermediate insulating layer (312) made of a polymeric insulating material, covering an external surface of the inner semiconducting layer (311),
• an outer layer (313) made of a second polymeric semiconducting material, covering an external surface of the insulating layer (312); and
- a water barrier layer (314) surrounding the insulation system joint (320), wherein the water barrier layer (314) is made of pre-formed water barrier elements (140; 240; 140a; 140b; 140c; 140d; 240a; 240b; 400a; 400b).
